(19) Europäisches Patentamt
European Patent Office
Office européen des brevets

(11) **EP 2 491 646 B1**

(12) **EUROPÄISCHE PATENTSCHRIFT**

(45) Veröffentlichungstag und Bekanntmachung des Hinweises auf die Patenterteilung:
**25.12.2013 Patentblatt 2013/52**

(21) Anmeldenummer: **10766021.9**

(22) Anmeldetag: **08.10.2010**

(51) Int Cl.:
*H02P 23/14* (2006.01)     *H02P 29/00* (2006.01)
*H02P 6/10* (2006.01)

(86) Internationale Anmeldenummer:
**PCT/EP2010/065053**

(87) Internationale Veröffentlichungsnummer:
**WO 2011/047971 (28.04.2011 Gazette 2011/17)**

(54) **ELEKTRONISCH KOMMUTIERTER ELEKTROMOTOR MIT KALIBRIERTER MOTORMOMENTKONSTANTE**

ELECTRONICALLY COMMUTATED ELECTRICAL MOTOR HAVING A CALIBRATED MOTOR TORQUE CONSTANT

MOTEUR ÉLECTRIQUE À COMMUTATION ÉLECTRONIQUE AYANT UNE CONSTANTE DE COUPLE MOTEUR CALIBRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2009 DE 102009045822**

(43) Veröffentlichungstag der Anmeldung:
**29.08.2012 Patentblatt 2012/35**

(73) Patentinhaber: **Robert Bosch GmbH**
**70442 Stuttgart (DE)**

(72) Erfinder: **FRICKER, David**
**F-67240 Oberhoffen Sur Moder (FR)**

(56) Entgegenhaltungen:
**FR-A1- 2 825 203        JP-A- 2000 287 481**
**JP-A- 2001 286 181      US-A1- 2003 227 271**
**US-A1- 2004 075 407    US-A1- 2008 018 278**

**Beschreibung**

Stand der Technik

Die Erfindung betrifft einen elektronisch kommutierten Elektromotor mit einem Stator und mit einem insbesondere permanentmagnetisch ausgebildeten Rotor. Der elektronisch kommutierte Elektromotor weist auch eine Steuereinheit auf, welche mit dem Stator verbunden und ausgebildet ist, den Stator, insbesondere Statorspulen des Stators, zum Erzeugen eines magnetischen Drehfeldes anzusteuern. Die Steuereinheit ist ausgebildet, eine in wenigstens einer Statorspule des Stators induzierte Spannung zu erfassen oder die induzierte Spannung in Abhängigkeit eines durch eine Statorspule fließenden Statorspulenstromes zu ermitteln, und in Abhängigkeit eines eine Rotorlage des Rotors repräsentierenden Rotorlagesignals und/oder eines eine Rotorumlauffrequenz des Rotors repräsentierenden Drehzahlsignals eine ein erzielbares Drehmoment repräsentierende Motormomentkonstante zu ermitteln. Die Steuereinheit ist bevorzugt ausgebildet, den Stator in Abhängigkeit der Motormomentkonstante anzusteuern.

Aus der DE 10 2007 020 068 A1 ist ein Verfahren und eine Vorrichtung zum Bestimmen einer Motormomentkonstante eines Elektromotors bekannt, bei der die Motormomentkonstante des Elektromotors während eines Betriebs des Motors in Abhängigkeit einer von dem Elektromotor erzeugten induzierten Spannung bestimmt wird.

Die US 2008/018278 A1 zeigt einen DC-Motor, der eine geringe Momentenwelligkeit aufweist, wenn man eine trapzförmigen Strom einspeist. Stromphasen-Größen werden verwendet für die Ansteuerung des Motors, wobei die Stromphasen-Größen durch die vektorielle Phasenverschiebung der Strome bestimmt wird.

Die JP2001286181 A zeigt eine Stromquelle mit einer Inverter-Schaltung, welche einen Motor antreibt durch Umwandeln eines Wechselstroms in Gleichstrom mittels einer AC / DC-Umwandlungsschaltung.

Die US2003/227271 A1 zeigt Erregungsstufen, die ausgebildet sind mit Hilfe erster und zweiter Sensorgruppen. Zusätzlich ist eine Drehmomentkonstante definiert für jede der Stufen. Ein Zielstromwert wird rechnerisch bestimmt, um den Motor gesteuert anzutreiben. Wenn eine Drehmomentanweisung, die ein Zieldrehmoment des Motors zeigt, in den Controller eingegeben wird, wird der Zielstromwert für jede Stufe entsprechend einer Drehmomentkonstanten-Zuordnungstabelle rechnerisch bestimmt, die eine Tabelle von Drehmomentkonstanten für unterschiedliche Phasen und unterschiedliche Stufen bereitstellt.

Offenbarung der Erfindung

Erfindungsgemäß ist die Steuereinheit bei dem elektronisch kommutierten Elektromotor der eingangsgenannten Art gemäß Anspruch 1 ausgebildet, - bevorzugt während eines Betriebes des Elektromotors - einen Frequenzgehalt der Motormomentkonstante zu erfassen, und in  Abhängigkeit des Frequenzgehaltes, insbesondere einer Frequenzamplitude der Motormomentkonstante, den Stator zum Erzeugen eines Drehmomentes anzusteuern.

Bevorzugt weist der Elektromotor einen Rotorlagesensor und/oder Drehzahlsensor auf, wobei der Rotorlagesensor ausgebildet ist, eine Rotorlage des Rotors zu erfassen und das die Rotorlage repräsentierende Rotorlagesignal zu erzeugen. Der Drehzahlsensor ist bevorzugt ausgebildet, die Rotorumlauffrequenz des Rotors zu erfassen und das die Rotorumlauffrequenz repräsentierende Drehzahlsignal zu erzeugen.

Durch das Erfassen des Frequenzgehaltes der Motormomentkonstante können vorteilhaft eine Rotormagnetfeldstärke und somit auch die Motormomentkonstante beeinflussende Faktoren genau erfasst werden. Weiter vorteilhaft kann der so ausgebildete elektronisch kommutierte Elektromotor vorteilhaft Fertigungstoleranzen, so beispielsweise eine Exzentrizität der Statorspulen, örtlich verschobene Permanentmagnete, elektrische Toleranzen von Bauteilen, insbesondere der Statorspulen, zueinander verschiedene Magnetisierung der Permanentmagnete, zueinander verschiedene Magnetfeldverläufe der Statorspulen, sowie eine temperaturabhängige Magnetfeldstärke von magnetischen Bauteilen, beispielsweise des permanentmagnetisch ausgebildeten Rotors erfasst werden. Beispielsweise weist das Material Ferrit bei niedrigen Temperaturen im Bereich von -40 Grad Celsius eine kleinere magnetische Feldstärke auf als bei 20 Grad Celsius. Das Material Neodyn weist bei hohen Temperaturen, beispielsweise bei 120 Grad Celsius eine kleinere magnetische Feldstärke auf als bei 20 Grad Celsius. Der Elektromotor kann so beispielsweise während eines Betriebes einfach kalibriert werden, so dass ein erzielbares Drehmoment über einen Rotorumlauf hinweg - beispielsweise in 1-Grad-Schritten - erfasst und die dazu ermittelte Motormomentkonstante zum weiteren Ansteuern des Stators verwendet oder abgespeichert werden kann.

Vorteilhaft kann der so ausgebildete elektronisch kommutierte Elektromotor die Motormomentkonstante über einen Rotorumlauf hinweg, weiter bevorzugt über wenigstens einen Teil eines Rotorumlaufes hinweg, insbesondere für eine Statorspule 120 Grad elektrisch, oder weiter bevorzugt nur 90 Grad oder für drei Statorspulen 60 Grad elektrisch, erfassen und so während eines Motorbetriebs den mechanischen und/oder elektrischen Wirkungsgrad des Elektromotors über ein Ermitteln der Motormomentkonstante erfassen.

Die Motormomentkonstante steht dabei mit dem zu erreichenden Drehmoment des Elektromotors wie folgt in Beziehung:

$$(1)\ P_{elektrisch} = U_{ind} \cdot I_{Strang}$$

$$(2)\ P_{mechanisch} = M \cdot \omega$$

$$(4)\ M = I_{Strang} \cdot B \cdot l \cdot r$$

mit:

$U_{ind}$ = Induzierte Spannung
P = Leistung
M = Drehmoment
w = Kreisfrequenz
B = magnetische Flussdichte
I = Länge eines stromdurchflossenen Leiters der Statorspule
r = Abstand des Leiters von einer Rotorlängsachse des Rotors

Bei Äquivalenz von elektrischer und mechanischer Leistung ergibt sich für die induzierte Spannung $U_{ind}$

$$(5)\ U_{ind} = \frac{M \cdot \omega}{I_{Strang}} = \omega \cdot B \cdot l \cdot r$$

Der in (5) und (4) gemeinsam auftretende Faktor

$$(6)\ k = B \cdot l \cdot r$$

wird als Motormomentkonstante bezeichnet.

In einer bevorzugten Ausführungsform des Elektromotors ist die Steuereinheit ausgebildet, insbesondere mittels Fast-Fourier-Transformation, eine Fourier-Transformierte der Motormomentkonstante zu erzeugen und den Stator in Abhängigkeit der Fouriertransformierten Motormomentkonstante anzusteuern. Dadurch kann vorteilhaft wenigstens eine, oder eine Mehrzahl von Frequenzkomponenten, bevorzugt Ordnungen aus einem Frequenzspektrum der Motormomentkonstante ermittelt werden und der Stator in Abhängigkeit der wenigstens einen Frequenzkomponente, insbesondere einer Amplitude oder einer spektralen Leistungsdichte der Frequenzkomponente, angesteuert werden.

In einer bevorzugten Ausführungsform des Elektromotors ist die Steuereinheit ausgebildet, bevorzugt mittels eines Ordnungsfilters, in Abhängigkeit des die Rotorumlauffrequenz repräsentierenden Drehzahlsignals eine Ordnungsanalyse der Fouriertransformierten Motormomentkonstante durchzuführen, und den Stator in Abhängigkeit eines Signalparameters, insbesondere eine Signalamplitude wenigstens einer Ordnung des Frequenzgehaltes der Motormomentkonstante, anzusteuern. Dadurch kann vorteilhaft ein beispielsweise temperaturabhängiger Drehmomentverlust mittels Frequenzanalyse, insbesondere Fourier-Frequenzanalyse, bevorzugt FFT-Analyse (FFT = Fast-Fourier-Transformation) erfasst werden.

In einer vorteilhaften Ausführungsvariante des Elektromotors ist die Steuereinheit ausgebildet, den Stator in Abhängigkeit von ungeradzahligen Oberwellen der Motormomentkonstante, bevorzugt nur in Abhängigkeit von ungeradzahligen Oberwellen der Motormomentkonstante anzusteuern. Dadurch kann vorteilhaft Rechenzeit zum Ermitteln der wirksamen Motormomentkonstante eingespart werden.

In einer vorteilhaften Ausführungsform des Elektromotors ist die Steuereinheit ausgebildet, ein zeitabhängiges und/oder rotorlageabhängiges Profil der Motormomentkonstante mittels Fourier-Rücktransformation der Fourier-transformierten Motormomentkonstante zu erzeugen und den Stator in Abhängigkeit des rotorlageabhängigen Profils anzusteuern. Dadurch kann vorteilhaft zum Erzeugen eines beim Betrieb des Motors zeitabhängigen, bezogen auf einen Rotorumlauf ortsabhängigen Profils der Motormomentkonstante, wenigstens eine Matrixoperation, bevorzugt eine Vielzahl von Matrixoperationen von der Steuereinheit ausgeführt werden.

Beispielsweise ist die Steuereinheit ausgebildet, ein zeitabhängiges und/oder rotorlageabhängiges Profil der Motormomentkonstante mittels selektiver Ordnungsfilterung eine Fourier-Rücktransformation der fouriertransformierten Motormomentkonstante zu erzeugen und den Stator in Abhängigkeit des zeit- und/oder rotorlageabhängigen Profils anzusteuern.

In einer vorteilhaften Ausführungsform des Elektromotors ist die Steuereinheit ausgebildet, den Stator in Abhängigkeit eines vorbestimmten Rotorwinkelbereichs, bevorzugt 120 Grad elektrisch, weiter bevorzugt 90 Grad elektrisch, besonders bevorzugt 60 Grad elektrisch, der Motormomentkonstante anzusteuern. Bei einem Rotorwinkelbereich von 60 Grad kann vorteilhaft eine Periode einer induzierten Spannung für eine Statorspule aus den Signalverläufen der induzierten Spannungen von drei Statorspulen zusammengesetzt werden. So brauchen nur die induzierten Spannungen von drei Statorspulen über einen Rotorwinkelbereich von 60 Grad erfasst werden, um mittels Addition der Signalverläufe der drei Statorspulen die induzierte Spannung für eine durchschnittliche Statorspuleneigenschaft zusammenzusetzen.

Dadurch kann vorteilhaft Rechenzeit und/oder Messzeit eingespart werden, und vorteilhaft eine Spiegelsymmetrie eines Signals der induzierten Motorspannung, und somit der Motormomentkonstante ausgenutzt werden.

Die Steuereinheit ist beispielsweise durch einen Mikroprozessor, einen Mikrokontroller oder ein FPGA (FPGA = Field-Programmable-Gate-Array) gebildet.

In einer anderen Ausführungsform des Elektromotors - unabhängig oder zusätzlich zu der vorab beschriebenen Variante mit einem Fourier-Transformator - kann die Steuereinheit die Motorkonstante - insbesondere phasenverschiebungsfrei - mittels eines Tiefpassfilters ermitteln. Dazu kann die Steuereinheit beispielsweise denselben oder einen gleichen Filter zweimal zeitlich hintereinander auf das Zeitsignal der Motormomentkonstante oder die induzierte Spannung, bevorzugt zuerst in Vorwärtsrichtung, dann in Rückwärtsrichtung, anwenden. Dadurch werden vorteilhaft nur im Frequenzspektrum die Amplituden der Frequenzkomponenten angepasst. Das Tiefpassfilter ist beispielsweise ein FIR-Filter (FIR = Finite-Impulse-Response).

Die Erfindung betrifft auch ein Verfahren gemäß Anspruch 8 zum Ansteuern eines elektronisch kommutierten Elektromotors mit einem Stator, und einem insbesondere permanentmagnetisch ausgebildeten Rotor, insbesondere des vorab beschriebenen Elektromotors. Bei dem Verfahren wird - bevorzugt während eines Betriebes des Elektromotors - eine ein erzeugbares Drehmoment des Elektromotors repräsentierende Motormomentkonstante, insbesondere in Abhängigkeit einer induzierten Spannung beim Drehbewegen des Rotors erfasst, wobei ein Frequenzgehalt der Motormomentkonstante erfasst wird, und in Abhängigkeit des Frequenzgehaltes, insbesondere einer Frequenzamplitude der Motormomentkonstante, der Stator zum Erzeugen eines Drehmomentes angesteuert wird.

Bevorzugt wird bei dem Verfahren insbesondere mittels FFT-Analyse eine Fourier-Transformierte der Motormomentkonstante erzeugt und der Stator in Abhängigkeit der fouriertransformierten Motormomentkonstante angesteuert.

Weiter bevorzugt wird bei dem Verfahren insbesondere mittels eines Ordnungsfilters, eine Ordnungsanalyse der fouriertransformierten Motormomentkonstante durchgeführt und der Stator in Abhängigkeit eines Signalparameters, insbesondere einer Signalamplitude wenigstens einer Ordnung der Motormomentkonstante angesteuert. Eine Ordnung ist dabei eine harmonische höhere Frequenz einer Grundfrequenz.

In einer bevorzugten Ausführungsform des Verfahrens wird der Stator in Abhängigkeit von nur ungeradzahligen Oberwellen der Motormomentkonstante angesteuert.

Bevorzugt wird bei dem Verfahren ein zeitabhängiges und/oder rotorlageabhängiges Profil der Motormomentkonstante mittels Fourier-Rücktransformation der fouriertransformierten Motormomentkonstante erzeugt und der Stator in Abhängigkeit des rotorlageabhängigen Profils angesteuert.

In einer vorteilhaften Ausführungsvariante des Verfahrens wird ein zeitabhängiges und/oder rotorlageabhängiges Profil der Motormomentkonstante mittels selektiver Ordnungsfilterung einer Fourier-Rücktransformation der fouriertransformierten Motormomentkonstante erzeugt und der Stator in Abhängigkeit des zeitabhängigen und/oder rotorlageabhängigen Profils angesteuert.

Die Erfindung wird nun im Folgenden anhand von Figuren und weiteren Ausführungsbeispielen erläutert. Weitere vorteilhafte Ausführungsvarianten ergeben sich aus den in den abhängigen Ansprüchen genannten Merkmalen und/oder den in der Figurenbeschreibung genannten Merkmalen.

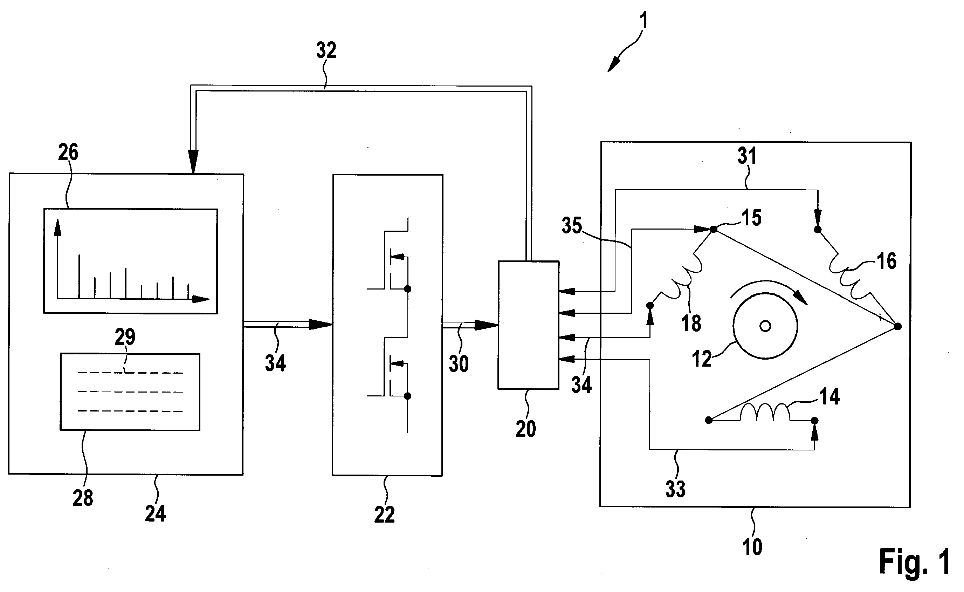

Figur 1 zeigt ein Ausführungsbeispiel für einen Elektromotor 1. Der Elektromotor 1 weist einen Stator 10 auf. Der Stator 10 weist drei Statorspulen, nämlich eine Statorspule 14, eine Statorspule 16 und eine Statorspule 18 auf, welche zusammen angeordnet sind, einen Rotor 12 des Elektromotors mittels eines magnetischen Drehfeldes' in eine Drehbewegung zu versetzen. Der Rotor 12 des Elektromotors 1 ist in diesem Ausführungsbeispiel permanentmagnetisch ausgebildet. Der Elektromotor 1 weist auch eine Leistungsendstufe 22 auf, welche ausgangsseitig über eine Verbindung 30 mit einem Anschluss 20 für den Stator 10 verbunden ist. Der Anschluss 20 ist über eine Verbindungsleitung 33 mit einem ersten Anschluss der Statorspule 14 verbunden. Der Anschluss 20 ist auch über eine Verbindungsleitung 34 mit einem ersten Anschluss der Statorspule 18, und über eine Verbindungsleitung 31 mit einem ersten Anschluss der Statorspule 16 verbunden. Die zweiten Anschlüsse der Statorspulen 14, 16 und 18 sind jeweils mit einem gemeinsamen Sternanschluss 15 verbunden. Der Sternanschluss 15 ist über eine Verbindungsleitung 35 mit dem Anschluss 20 verbunden. Der Anschluss 20 ist auch über eine Verbindung 32 mit einer Steuereinheit 24 des Elektromotors 1 verbunden. Die Steuereinheit 24 kann über die Verbindung 32, den Anschluss 20 und die Verbindungsleitungen 31, 33, 34 und beispielsweise zusätzlich 35 von den Statorspulen 14, 16 und 18 jeweils in den Statorspulen 14, 16 und 18 induzierte Spannungen erfassen. Über den Sternanschluss 15 können beispielsweise Ordnungen dritten Grades oder eines vielfachen dritten Grades, beispielsweise eine sechste oder neunte Ordnung, erfasst werden. Die Statorspulen 14, 16 und 18 können jeweils über den Anschluss 20 und die Verbindung 30 von der Leistungsendstufe 22 zum Erzeugen des magnetischen Drehfeldes bestromt werden. Die Steuereinheit 24 ist ausgangsseitig über eine Verbindung 34 mit der Leistungsendstufe 22 verbunden und ist ausgebildet, die Leistungsendstufe 22 zum Bestromen der Statorspulen 14, 16 und 18 derart anzusteuern, dass mittels der Statorspulen 14, 16, und 18 das magnetische Drehfeld zum Drehbewegen des Rotors 12 erzeugt werden kann.

Die Steuereinheit 24 ist ausgebildet, über die Verbindung 32 und den Anschluss 20 von den Statorspulen 14, 16 und 18 jeweils eine induzierte Spannung zu erfassen und diese analog-zu-digital zu wandeln. Die Steuereinheit 24 ist ausgebildet, in einem weiteren Schritt die zuvor analog-zu-digital gewandelten induzierten Spannungen jeweils durch die Rotorumlauffrequenz des Rotors 12 zu dividieren und so eine Motormomentkonstante für jeden Strang, das heißt für jede Statorspule der Statorspulen 14, 16 und 18 zu ermitteln. Das Ermitteln, insbesondere Berechnen der Motormomentkonstante kann dabei wie folgt erfolgen:

$$(7)\ a_k = \Delta\alpha \cdot \sum_{j=0}^{n-1} K_u(j \cdot \Delta\alpha) \cdot \cos(k \cdot j \cdot \Delta\alpha) \quad \text{und} \quad b_k = \Delta\alpha \cdot \sum_{j=0}^{n-1} K_u(j \cdot \Delta\alpha) \cdot \sin(k \cdot j \cdot \Delta\alpha)$$

mit

$a_k$, $b_k$ = Fourierkoeffizienten

$K_u$ = Motormomentkonstante für eine Statorspule des Strangs U

k = Wellenzahl, $k = \dfrac{2\Pi}{\lambda}$ , mit $\lambda$ = Wellenlänge

n = Zahl der Abtastwerte über eine Periode

In Vektorschreibweise kann der Frequenzvektor der Motorkonstante vorteilhaft als Matrix [F] berechnet werden:

$$(8)\quad [F] = \begin{bmatrix} a1 \\ \vdots \\ am \\ b1 \\ \vdots \\ bm \end{bmatrix} = \begin{bmatrix} \Delta\alpha \cdot \cos(1 \cdot 0 \cdot \Delta\alpha) & \cdots & \Delta\alpha \cdot \cos(1 \cdot (n-1) \cdot \Delta\alpha) \\ \vdots & \ddots & \vdots \\ \Delta\alpha \cdot \cos(m \cdot 0 \cdot \Delta\alpha) & \cdots & \Delta\alpha \cdot \cos(m \cdot (n-1) \cdot \Delta\alpha) \\ \Delta\alpha \cdot \sin(1 \cdot 0 \cdot \Delta\alpha) & \cdots & \Delta\alpha \cdot \sin(1 \cdot (n-1) \cdot \Delta\alpha) \\ \vdots & \ddots & \vdots \\ \Delta\alpha \cdot \sin(m \cdot 0 \cdot \Delta\alpha) & \cdots & \Delta\alpha \cdot \sin(m \cdot (n-1) \cdot \Delta\alpha) \end{bmatrix} \bullet \begin{bmatrix} K_u(0 \cdot \Delta\alpha) \\ \vdots \\ K_u((n-1) \cdot \Delta\alpha) \end{bmatrix} = [FFT] \bullet [K]$$

mit

[K] = Motorkonstantenvektor

[FFT] = Operator einer zeitdiskreten Fouriertransformation.

Durch eine Reduzierung des abgetasteten Rotorwinkelbereiches auf beispielsweise 90 Grad oder bevorzugt 60 Grad, kann eine reduzierte Motormomentkonstante Kr als Vektor wie folgt verwendet werden:

$$(9)\ [Kr] = \begin{bmatrix} Ku(0 \cdot \Delta\alpha) \\ Kv(0 \cdot \Delta\alpha) \\ Kw(0 \cdot \Delta\alpha) \\ \vdots \\ Ku((n_2 - 1) \cdot \Delta\alpha) \\ Kv((n_2 - 1) \cdot \Delta\alpha) \\ Kw((n_2 - 1) \cdot \Delta\alpha) \end{bmatrix}$$

mit

$K_u$ = Motormomentkonstante im Bereich der Statorspule Strang U
$K_v$ = Motormomentkonstante im Bereich der Statorspule Strang V
$K_w$ = Motormomentkonstante im Bereich der Statorspule Strang W

wobei $n_2$ die Zahl der Abtastwerte des Rotorwinkelbereiches, beispielsweise über 60 Grad oder 90 Grad elektrisch, ist.

Der Frequenzvektor [F] kann dann durch eine entsprechend äquivalente Multiplikation [FFTr]·[Kr] ersetzt werden.

Die Steuereinheit 24 ist ausgebildet, in einem weiteren Schritt die Motormomentkonstante zu Fourier-transformieren und mittels eines Ordnungsfilters 26 Grund- und Oberwellen zu der Drehzahl des Rotors 12 zu ermitteln. Die Ermittlung kann bevorzugt mittels FFT-Analyse erfolgen. Die Steuereinheit 24 ist beispielsweise ausgebildet, in einem weiteren Schritt ein zeitliches, beziehungsweise örtliches Profil der Motormomentkonstanten mittels der zuvor ermittelten Frequenzkomponenten, insbesondere wenigstens einer, bevorzugt zwei, weiter bevorzugt einer Mehrzahl von Ordnungen zu rekonstruieren. Das Profil 29 der Motormomentkonstante kann beispielsweise in einem Speicher 28 abgespeichert werden. Der Speicher 28 kann Bestandteil der Steuereinheit 24 sein oder mit dieser verbunden sein.

Zum Ermitteln der Ordnungen kann die Steuereinheit 24 eine Drehzahl des Rotors, also die Rotorumlauffrequenz in Abhängigkeit eines von einem - in dieser Figur nicht dargestellten - Drehzahlsensor erzeugten Drehzahlsignals ermitteln oder die Rotorumlauffrequenz in Abhängigkeit von wenigstens einer, bevorzugt zwei oder drei der in den Statorspulen 14, 16, und 18 induzierten Spannungen ermitteln.

Die Steuereinheit 24 kann beispielsweise zum Ermitteln der Motormomentkonstante, im Folgenden der Konstante Kum für die Statorspule U im Ortsbereich, insbesondere Rotorwinkelbereich, eine Matrixberechnung durchführen. Dabei können beispielsweise selektiv nur die zu erwartenden Ordnungen im Zeit- und/oder Ortsbereich zurücktransformiert werden. Die Matrixberechnung kann beispielsweise von der Steuereinheit 24 wie folgt ausgeführt werden:

$$[Kum] = \begin{bmatrix} Kum(0 \cdot \Delta\alpha) \\ \vdots \\ Kum((nr-1) \cdot \Delta\alpha) \end{bmatrix} = \begin{bmatrix} \cos(1 \cdot 0 \cdot \Delta\alpha) & \cdots & \cos(m \cdot 0 \cdot \Delta\alpha) & \sin(1 \cdot 0 \cdot \Delta\alpha) & \cdots & \sin(m \cdot 0 \cdot \Delta\alpha) \\ \vdots & \ddots & \vdots & \vdots & \ddots & \vdots \\ \cos(1 \cdot (nr-1) \Delta\alpha) & \cdots & \cos(m \cdot (nr-1) \Delta\alpha) & \sin(1 \cdot (nr-1) \Delta\alpha) & \cdots & \sin(m \cdot (nr-1) \Delta\alpha) \end{bmatrix} \bullet \begin{bmatrix} a1 \\ \vdots \\ am \\ b1 \\ \vdots \\ bm \end{bmatrix} = [R] \bullet [F] \quad (10)$$

mit

[Kum] = Vektor der Motormomentkonstante für den Strang U im Ortsbereich, insbesondere Rotorwinkelbereich.

Der Erfassungsbereich oder ein zu berechnender Bereich der Motormomentkonstanten kann beispielsweise auf 60 Grad elektrisch eingeschränkt sein. Die Steuereinheit kann vorteilhaft so ausgebildet sein, weil angenommen werden kann, dass ein die Motormomentkonstante örtlich repräsentierender Signalverlauf eines Motormomentkonstanten-Signals symmetrisch gebildet ist, und dass ein Profil der Motormomentkonstante keine geradzahligen Oberwellen aufweist. Dadurch kann vorteilhaft eine Spiegelsymmetrie eines Signals, insbesondere des zuvor erfassten Motormomentkonstanten-Signals ausgenutzt werden. Der Vektor der Motormomentkonstanten kann dann wie der Vektor (9) ausgebildet sein.

Die Steuereinheit 24 kann beispielsweise eine Rekonstruktion der Motormomentkonstante im Zeitbereich, beziehungsweise im Ortsbereich über einen Rotorumlauf hinweg gemäß Formel (10) durchführen.

Vorteilhaft kann die Steuereinheit die Fast-Fourier-Transformation in Sub-Matrizen durchführen. Dadurch kann vorteilhaft eine gleichmäßige Auslastung der Steuereinheit erfolgen.

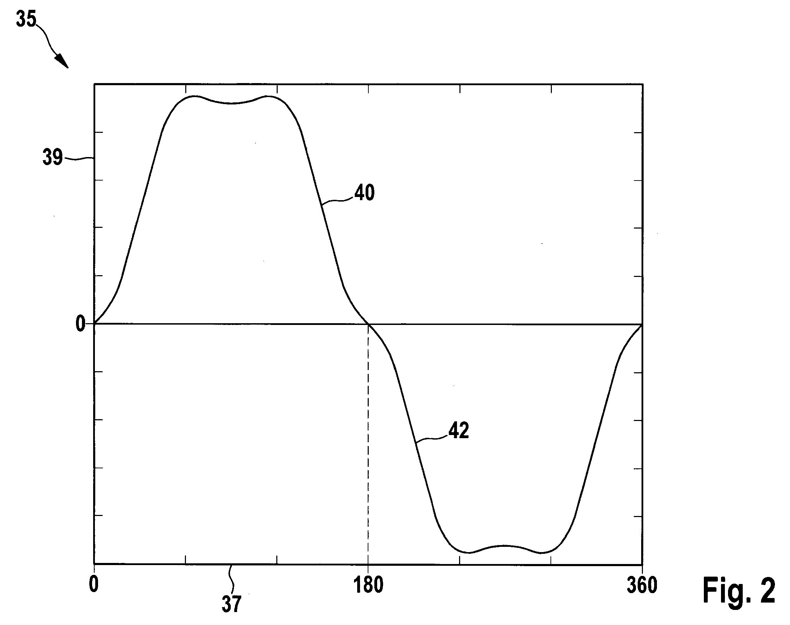

Figur 2 zeigt ein Ausführungsbeispiel für einen Signalverlauf, welcher eine über einen Abschnitt eines Rotorumlaufes im Bereich einer Statorspule hinweg ortsabhängige Motormomentkonstante repräsentiert. Der Signalverlauf ist beispielsweise für eine Statorspule, beispielsweise die Statorspule 14 in Figur 1, von der Steuereinheit 1 ermittelt worden.

Figur 2 zeigt dazu ein Diagramm 35 mit einer Abszisse 37 und einer Ordinate 39. Die Abszisse 37 repräsentiert einen Rotorumlaufwinkel des Rotors 12 in Figur 1, die Ordinate repräsentiert eine Amplitude der Motormomentkonstante.

Das Diagramm 35 zeigt auch eine Kurve mit einer ersten Teilkurve 40 und einer zweiten Teilkurve 42. Die Teilkurve 40 repräsentiert eine erste Halbwelle des Signalverlaufs einer induzierten Spannung, die Teilkurve 42 repräsentiert eine zweite Halbwelle des Signalverlaufs der induzierten Spannung, jeweils geteilt durch die Rotorumlauffrequenz des die induzierte Spannung erzeugenden Rotors 12.

Sichtbar ist, dass die Teilkurven 40 und 42 jeweils eine sinusförmige Grundkurve, und zusätzlich dazu ungeradzahlige Oberwellen repräsentieren.

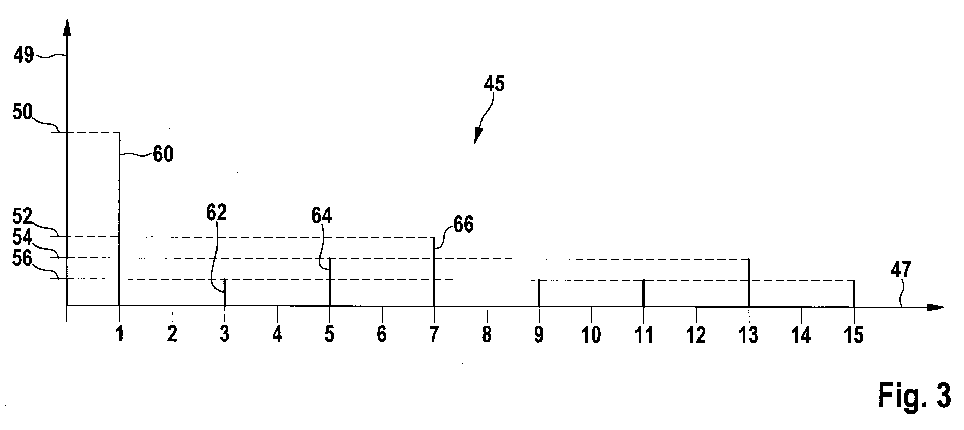

Figur 3 zeigt ein Spektrum 45, welches Frequenzkomponenten der in Figur 2 dargestellten Motormomentkonstante aufweist. Das Spektrum 45 ist in einem Diagramm mit einer Frequenzachse 47 und eine Amplitudenachse 49 dargestellt.

Auf der Frequenzachse 47 sind Ordnungen, das heißt Harmonische zu einer Grundfrequenz der in Figur 2 dargestellten Motormomentkonstante aufgetragen. Das Spektrum 45 zeigt eine erste Ordnung 60, also die der Rotorumlauffrequenz entsprechende Grundfrequenz mit einer Amplitude 50, eine dritte Ordnung 62 mit einer Amplitude 56, eine fünfte Ordnung 64 mit einer Amplitude 54 und eine siebte Ordnung 66 mit einer Amplitude 52. Die Amplitude 52 ist kleiner als die Amplitude 50, die Amplitude 54 ist kleiner als die Amplitude 52 und die Amplitude 56 ist kleiner als die Amplitude 54.

Die in Figur 1 dargestellte Steuereinheit 24 kann mittels des Ordnungsfilters 26 die Amplituden 50, 52, 54 und 56 der Harmonischen des beispielsweise in Figur 2 dargestellten Motormomentkonstanten-Signals erfassen.

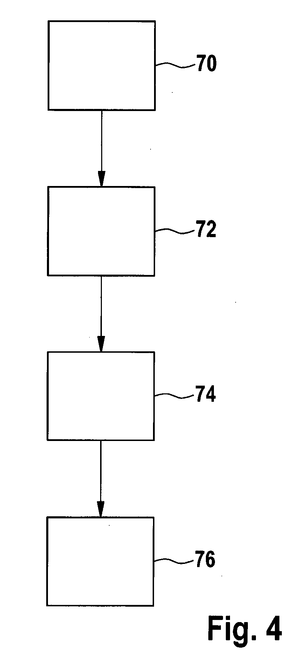

Figur 4 zeigt ein Ausführungsbeispiel für ein Verfahren zum Betreiben eines elektronisch kommutierten Elektromotors, beispielsweise des in Figur 1 dargestellten Elektromotors 1 mit einem permanentmagnetisch ausgebildeten Rotor 12.

Bei dem Verfahren wird in einem Schritt 70 während eines Betriebes des Elektromotors eine ein erzeugbares Drehmoment des Elektromotors repräsentierende Motormomentkonstante, insbesondere in Abhängigkeit einer induzierten Spannung beim Drehbewegen des Rotors erfasst.

In einem Schritt 72 wird mittels FFT-Analyse eine Fourier-Transformierte der Motormomentkonstante erzeugt und in einem weiteren Schritt 74 mittels eines Ordnungsfilters eine Ordnungsanalyse der fouriertransformierten Motormomentkonstante durchgeführt und wenigstens ein Signalparameter, insbesondere eine Signalamplitude wenigstens einer Ordnung der Motormomentkonstante ermittelt und abgespeichert.

In einem Schritt 76 wird der Stator in Abhängigkeit von Ordnungen der Motormomentkonstante, beispielweise nur ungeradzahligen Ordnungen der Motormomentkonstante angesteuert.

## Patentansprüche

1. Elektronisch kommutierter Elektromotor (1) mit einem Stator (10) und einem insbesondere permanentmagnetisch ausgebildeten Rotor (12), und mit einer Steuereinheit (24), welche mit dem Stator (10) verbunden und ausgebildet ist, den Stator (10) zum Erzeugen eines magnetischen Drehfeldes anzusteuern, und wobei die Steuereinheit (24) ausgebildet ist, eine in wenigstens einer Statorspule (14, 16, 18) des Stators induzierte Spannung zu erfassen und in Abhängigkeit eines eine Rotorumlauffrequenz des Rotors repräsentierenden Drehzahlsignals eine ein erzielbares Drehmoment repräsentierende Motormomentkonstante zu ermitteln,
**dadurch gekennzeichnet, dass**
die Steuereinheit (24) ausgebildet ist, durch eine Reduzierung des abgetasteten Rotorwinkelbereichs eine reduzierte Motormomentkonstante zu bilden, einen Frequenzgehalt (45, 60, 62, 64, 66) der reduzierten Motormomentkonstante zu erfassen, und in Abhängigkeit des Frequenzgehaltes (45, 60, 62, 64, 66), insbesondere einer Frequenzamplitude (60, 62, 64, 66), der reduzierten Motormomentkonstante den Stator (10) zum Erzeugen eines Drehmomentes anzusteuern.

2. Elektromotor (1) nach Anspruch 1,
**dadurch gekennzeichnet, dass**

die Steuereinheit ausgebildet ist, insbesondere mittels Fast-Fourier-Transformation eine Fourier-Transformierte (45) der Motormomentkonstante zu erzeugen und den Stator (10) in Abhängigkeit der fouriertransformierten Motormomentkonstante anzusteuern.

**3.** Elektromotor (1) nach Anspruch 2,
**dadurch gekennzeichnet, dass**
die Steuereinheit (24) ausgebildet ist, eine Ordnungsanalyse der fouriertransformierten Motormomentkonstante durchzuführen und den Stator in Abhängigkeit eines Signalparameters, insbesondere einer Signalamplitude wenigstens einer Ordnung (60, 62, 64, 66) des Frequenzgehaltes (45) der Motormomentkonstante anzusteuern.

**4.** Elektromotor (1) nach Anspruch 2 oder 3,
**dadurch gekennzeichnet, dass**
die Steuereinheit (24) ausgebildet ist, den Stator in Abhängigkeit von nur ungeradzahligen Ordnungen (60, 62, 64, 66) der Motormomentkonstante anzusteuern.

**5.** Elektromotor (1) nach einem der Ansprüche 3 oder 4,
**dadurch gekennzeichnet, dass**
die Steuereinheit (24) ausgebildet ist, ein zeitabhängiges und/oder rotorlageabhängiges Profil der Motormomentkonstante mittels Fourier-Rücktransformation der fouriertransformierten Motormomentkonstante zu erzeugen und den Stator (10) in Abhängigkeit des zeit- und/oder rotorlageabhängigen Profils anzusteuern.

**6.** Elektromotor (1) nach einem der Ansprüche 3 oder 4,
**dadurch gekennzeichnet, dass**
die Steuereinheit (24) ausgebildet ist, ein zeitabhängiges und/oder rotorlageabhängiges Profil der Motormomentkonstante mittels selektiver Ordnungsfilterung einer Fourier-Rücktransformation der fouriertransformierten Motormomentkonstante zu erzeugen und den Stator (10) in Abhängigkeit des zeit- und/oder Rotorlageabhängigen Profils anzusteuern.

**7.** Elektromotor (1) nach einem der vorhergehenden Ansprüche,
**dadurch gekennzeichnet, dass**
die Steuereinheit (24) ausgebildet ist, den Stator (10) in Abhängigkeit eines vorbestimmten Rotorwinkelbereichs, insbesondere 90 Grad elektrisch oder 60 Grad elektrisch, der Motormomentkonstanten anzusteuern.

**8.** Verfahren (70, 72, 74, 76) zum Ansteuern eines elektronisch kommutierten Elektromotors (1) mit einem Stator (10) und einem insbesondere permanentmagnetisch ausgebildeten Rotor (12), bei dem eine ein erzeugbares Drehmoment des Elektromotors repräsentierende Motormomentkonstante, insbesondere in Abhängigkeit einer induzierten Spannung beim Drehbewegen des Rotors (12) erfasst wird,
**dadurch gekennzeichnet, dass** durch eine Reduzierung des abgetasteten Rotorwinkelbereichs eine reduzierte Motormomentkonstante gebildet wird,
ein Frequenzgehalt (45) der reduzierten Motormomentkonstante erfasst wird, und in Abhängigkeit des Frequenzgehaltes, insbesondere einer Frequenzamplitude, der reduzierten Motormomentkonstante der Stator (10) zum Erzeugen eines Drehmomentes angesteuert wird.

**9.** Verfahren nach Anspruch 8, **dadurch gekennzeichnet, dass** insbesondere mittels FFT-Analyse eine Fourier-Transformierte (45) der Motormomentkonstante erzeugt wird und der Stator in Abhängigkeit der fouriertransformierten Motormomentkonstante angesteuert wird.

**10.** Verfahren nach Anspruch 8 oder 9, **dadurch gekennzeichnet, dass** eine Ordnungsanalyse der fouriertransformierten Motormomentkonstante durchgeführt wird und der Stator in Abhängigkeit wenigstens eines Signalparameters, insbesondere einer Signalamplitude, wenigstens einer Ordnung (60, 62, 64, 66) der Motormomentkonstante angesteuert wird.

**11.** Verfahren nach einem der Ansprüche 8 bis 10, **dadurch gekennzeichnet, dass** der Stator in Abhängigkeit von nur ungeradzahligen Ordnungen (60, 62, 64, 66) der Motormomentkonstante angesteuert wird.

**12.** Verfahren nach einem der Ansprüche 8 bis 11, **dadurch gekennzeichnet, dass** ein zeitabhängiges und/oder rotorlageabhängiges Profil der Motormomentkonstante mittels Fourier-Rücktransformation der fouriertransformierten Motormomentkonstante erzeugt wird und der Stator in Abhängigkeit des rotorlageabhängigen Profils angesteuert wird.

**13.** Verfahren nach einem der Ansprüche 8 bis 11, **dadurch gekennzeichnet, dass** ein zeitabhängiges und/oder rotorlageabhängiges Profil der Motormomentkonstante mittels selektiver Ordnungsfilterung einer Fourier-Rücktransformation der fouriertransformierten Motormomentkonstante erzeugt wird und der Stator in Abhängigkeit des zeit- und/oder rotorlageabhängigen Profils angesteuert wird.

**Claims**

**1.** Electronically commutated electrical motor (1) having a stator (10) and a rotor (12) which is, in particular, formed using permanent magnets, and having a control unit (24) which is connected to the stator (10) and is designed to drive the stator (10) to generate a rotary magnetic field, the control unit (24) being designed to detect a voltage induced in at least one stator coil (14, 16, 18) of the stator and to determine a motor torque constant representing a torque which can be achieved as a function of a rotational speed signal representing a rotor revolution frequency of the rotor, **characterized in that** the control unit (24) is designed to form a reduced motor torque constant by reducing the sampled rotor angle range, to detect a frequency content (45, 60, 62, 64, 66) of the reduced motor torque constant and to drive the stator (10) to produce a torque as a function of the frequency content (45, 60, 62, 64, 66), in particular a frequency amplitude (60, 62, 64, 66), of the reduced motor torque constant.

**2.** Electrical motor (1) according to Claim 1, **characterized in that** the control unit is designed to generate a Fourier transform (45) of the motor torque constant, in particular using fast Fourier transformation, and to drive the stator (10) as a function of the Fourier-transformed motor torque constant.

**3.** Electrical motor (1) according to Claim 2, **characterized in that** the control unit (24) is designed to carry out an order analysis of the Fourier-transformed motor torque constant and to drive the stator as a function of a signal parameter, in particular a signal amplitude, of at least one order (60, 62, 64, 66) of the frequency content (45) of the motor torque constant.

**4.** Electrical motor (1) according to Claim 2 or 3, **characterized in that** the control unit (24) is designed to- drive the stator as a function of only odd orders (60, 62, 64, 66) of the motor torque constant.

**5.** Electrical motor (1) according to either of Claims 3 and 4, **characterized in that** the control unit (24) is designed to generate a time-dependent and/or rotor-position-dependent profile of the motor torque constant by means of inverse Fourier transformation of the Fourier-transformed motor torque constant and to drive the stator (10) as a function of the time-dependent and/or rotor-position-dependent profile.

**6.** Electrical motor (1) according to either of Claims 3 and 4, **characterized in that** the control unit (24) is designed to generate a time-dependent and/or rotor-position-dependent profile of the motor torque constant by means of selective order filtering of inverse Fourier transformation of the Fourier-transformed motor torque constant and to drive the stator (10) as a function of the time-dependent and/or rotor-position-dependent profile.

**7.** Electrical motor (1) according to one of the preceding claims, **characterized in that** the control unit (24) is designed to drive the stator (10) as a function of a predetermined rotor angle range, in particular 90 degrees electrical or 60 degrees electrical, of the motor torque constant.

**8.** Method (70, 72, 74, 76) for driving an electronically commutated electrical motor (1) having a stator (10) and a rotor (12) which is, in particular, formed using permanent magnets, in which a motor torque constant representing a torque of the electrical motor which can be produced is detected, in particular as a function of an induced voltage during rotation of the rotor (12), **characterized in that** a reduced motor torque constant is formed y reducing the sampled rotor angle range, a frequency content (45) of the reduced motor torque constant is detected, and the stator (10) is driven to produce a torque as a function of the frequency content, in particular a frequency amplitude, of the reduced motor torque constant.

**9.** Method according to Claim 8, **characterized in that** a Fourier transform (45) of the motor torque constant is generated, in particular by means of FFT analysis, and the stator is driven as a function of the Fourier-transformed motor torque constant.

**10.** Method according to Claim 8 or 9, **characterized in that** an order analysis of the Fourier-transformed motor torque constant is carried out and the stator is driven as a function of at least one signal parameter, in particular a signal amplitude, of at least one order (60, 62, 64, 66) of the motor torque constant.

**11.** Method according to one of Claims 8 to 10, **characterized in that** the stator is driven as a function of only odd orders (60, 62, 64, 66) of the motor torque constant.

**12.** Method according to one of Claims 8 to 11, **characterized in that** a time-dependent and/or rotor-position-dependent profile of the motor torque constant is generated by means of inverse Fourier transformation of the Fourier-transformed motor torque constant and the stator is driven as a function of the rotor-position-dependent profile.

**13.** Method according to one of Claims 8 to 11, **characterized in that** a time-dependent and/or rotor-position-dependent profile of the motor torque constant is generated by means of selective order filtering of inverse Fourier transformation of the Fourier-transformed motor torque constant and the stator is driven as a function of the time-dependent and/or rotor-position-dependent profile.


**Revendications**

**1.** Moteur électrique (1) à commutation électronique présentant un stator (10), un rotor (12) en particulier à magnétisation permanente et une unité de commande (24) raccordée au stator (10) et configurée pour amener le stator (10) à former un champ magnétique tournant,
l'unité de commande (24) étant configurée pour saisir une tension induite dans au moins une bobine (14, 16, 18) du stator et pour déterminer en fonction d'un signal de vitesse de rotation qui représente la fréquence de rotation du rotor une constante de couple de moteur qui représente le couple de rotation apte à être formé,
**caractérisé en ce que**
l'unité de commande (24) est configurée pour former une constante du couple du moteur réduite par réduction de la plage échantillonnée d'angle du rotor, pour saisir la teneur en fréquence (45, 60, 62, 64, 66) de la constante réduite du couple du moteur et pour amener le stator (10) à produire un couple de rotation en fonction de la teneur en fréquence (45, 60, 62, 64, 66) et en particulier de l'amplitude en fréquence (60, 62, 64, 66) de la constante réduite du couple du moteur.

**2.** Moteur électrique (1) selon la revendication 1, **caractérisé en ce que** l'unité de commande est configurée pour former une transformée de Fourier (45) de la constante de couple du moteur, en particulier au moyen d'une transformation rapide de Fourier, et pour commander le stator (10) en fonction de la transformée de Fourier de la constante du couple du moteur.

**3.** Moteur électrique (1) selon la revendication 2, **caractérisé en ce que** l'unité de commande (24) est configurée pour exécuter une analyse d'ordre de la transformée de Fourier de la constante de couple du moteur et pour commander le. stator en fonction d'un paramètre du signal, en particulier de l'amplitude du signal d'au moins un ordre (60, 62, 64, 66) de la teneur en fréquence (45) de la constante de couple du moteur.

**4.** Moteur électrique (1) selon les revendications 2 ou 3, **caractérisé en ce que** l'unité de commande (24) est configurée pour commander le stator uniquement en fonction des ordres impairs (60, 62, 64, 66) de la constante de couple du moteur.

**5.** Moteur électrique (1) selon l'une des revendications 3 ou 4, **caractérisé en ce que** l'unité de commande (24) est configurée pour former au moyen d'une transformation inverse de Fourier de la transformée de Fourier de la constante de couple de moteur un profil de constante de couple du moteur en fonction du temps ou de la position du rotor et pour commander le stator (10) en fonction du profil dépendant du temps et/ou de la position du rotor.

**6.** Moteur électrique (1) selon l'une des revendications 3 ou 4, **caractérisé en ce que** l'unité de commande (24) est configurée pour former par filtrage sélectif de l'ordre de la transformée inverse de Fourier de la transformée de Fourier de la constante de couple de moteur un profil de la constante de couple du moteur dépendant du temps et/ou de la position du rotor et pour commander le stator (10) en fonction du profil dépendant du temps et/ou de la position du rotor.

**7.** Moteur électrique (1) selon l'une des revendications précédentes, **caractérisé en ce que** l'unité de commande (24) est configurée pour commander le stator (10) en fonction d'une plage angulaire prédéterminée du rotor, en particulier de 90 degrés électriques ou de 60 degrés électriques de la constante de couple du moteur.

8. Procédé (70, 72, 74, 76) de commande d'un moteur électrique (1) à commutation électronique présentent un stator (10) et un rotor (12) en particulier à magnétisation permanente, dans lequel une constante de couple du moteur qui représente le couple de rotation que peut former le moteur électrique est saisie en particulier en fonction de la tension induite lors du déplacement de rotation du rotor (12),
**caractérisé en ce que**
une constante de couple du moteur réduite par réduction de la plage angulaire échantillonnée du rotor est formée,
**en ce qu'**une teneur en fréquence (45) de la constante de couple du moteur est saisie et
**en ce que** le stator (10) est commandé pour former un couple de rotation en fonction de la teneur en fréquence et en particulier de l'amplitude en fréquence de la constante réduite du couple du moteur.

9. Procédé selon la revendication 8, **caractérisé en ce qu'**une transformée de Fourier (45) de la constante de couple de moteur est formée en particulier par analyse FFT et **en ce que** le stator est commandé en fonction de la transformée de Fourier de la constante de couple du moteur.

10. Procédé selon les revendications 8 ou 9, **caractérisé en ce qu'**une analyse d'ordre de la transformée de Fourier de la constante de couple du moteur est exécutée et **en ce que** le stator est commandé en fonction d'au moins un paramètre du signal, en particulier l'amplitude du signal d'au moins un ordre (60, 62, 64, 66) de la constante de couple du moteur.

11. Procédé selon l'une des revendications 8 à 10, **caractérisé en ce que** le stator est commandé uniquement en fonction des ordres impairs (60, 62, 64, 66) de la constante de couple du moteur.

12. Procédé selon l'une des revendications 8 à 11, **caractérisé en ce qu'**un profil de la constante de couple du moteur dépendant du temps et/ou de la position du rotor est formé par transformée inverse de Fourier de la transformée de Fourier de la constante de couple de moteur et **en ce que** le stator est commandé en fonction du profil dépendant de la position du rotor.

13. Procédé selon l'une des revendications 8 à 11, **caractérisé en ce qu'**un profil de la constante de couple de moteur dépendant du temps et/ou de la position du rotor est formé par filtrage sélectif d'ordre de la transformation inverse de Fourier de la transformée de Fourier de la constante de couple du moteur et **en ce que** le stator est commandé en fonction du profil dépendant du temps et/ou de la position du rotor.

Fig. 1

Fig. 2

EP 2 491 646 B1

Fig. 3

EP 2 491 646 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007020068 A1
- US 2008018278 A1
- JP 2001286181 A
- US 2003227271 A1